# EUROPÄISCHE PATENTSCHRIFT

(11) **EP 0 470 330 B1**
(45) Veröffentlichungstag und Bekanntmachung des Hinweises auf die Patenterteilung: **15.12.1999**
(21) Anmeldenummer: 91105477.3
(22) Anmeldetag: 06.04.1991
(51) Int. Cl.: F02M 35/024, B01D 46/24

(54) **Ansaugluftfilter für die Verbrennungskraftmaschine eines Fahrzeugs**
Intake air filter for vehicle internal combustion engine
Filtre à air d'aspiration pour moteur à combustion interne d'un véhicule

(30) Priorität: 06.08.1990 DE 4024898
(43) Veröffentlichungstag der Anmeldung: 12.02.1992
(73) Patentinhaber: FILTERWERK MANN & HUMMEL GMBH, 71631 Ludwigsburg (DE)
(72) Erfinder: Behrendt, Bernhard, W-7141 Beilstein (DE); Benzler, Heinz, W-7141 Kirchberg/Murr (DE); Ernst, Volker, W-7123 Sachsenheim 1 (DE)
(74) Vertreter: Voth, Gerhard, Dipl.-Ing.

(56) Entgegenhaltungen:
- DE-A- 2 824 280
- FR-A- 1 379 165
- FR-A- 2 261 041
- US-A- 4 720 292

## Beschreibung

Die Erfindung betrifft ein Ansaugluftfilter für die Verbrennungskraftmaschine eines Fahrzeugs nach dem Oberbegriff des unabhängigen Patentanspruchs 1.

Ein Ansaugluftfilter dieser Art ist aus der US-A-47 20 292 bekannt. Dieses besteht aus einem zylinderförmigen Gehäuse, welches an seinem Umfang eine Einlaßöffnung für die Rohluft aufweist und an einer Stirnseite mit einem Auslaß für die Reinluft versehen ist. Im Inneren dieses Gehäuse befindet sich eine Patrone bzw. ein Filtereinsatz. Dieser Filtereinsatz erstreckt sich über die gesamte axiale Länge des Gehäuses und weist an seiner, dem Reinluftauslaß zugewandten Stirnseite eine Dichtung auf, die unmittelbar an der Stirnseite des Gehäuses anliegt. In das Innere des Gehäuses erstreckt sich ein rohrförmiger Ansatz. An diesem Ansatz stützt sich der Filtereinsatz zusätzlich ab, so daß eine radiale Sicherung des Filtereinsatzes im Gehäuse gewährleistet ist. An der, dem Luftauslaß gegenüberliegenden Seite ist das Gehäuse mit einem Deckel verschlossen. Der Deckel hat ferner die Aufgabe, auf den Filtereinsatz eine Kraft in Richtung des Luftauslasses auszuüben und damit den Filtereinsatz in seiner Einbaulage zu halten. Der Filtereinsatz wird also unmittelbar durch den Deckel in seiner axialen Lage fixiert.

Dieser Aufbau erfordert eine sehr hohe Genauigkeit der Länge des Filtereinsatzes als auch der Länge des Gehäuses, damit auf den Filtereinsatz immer eine gleichmäßige Vorspannung ausgeübt wird und nicht die Gefahr besteht, daß der Filtereinsatz sich in axialer Richtung bewegen und eventuell verschieben kann. Da eine Führung des Filtereinsatzes an dem Gehäuse nicht vorgesehen ist, kann bei der Montage dieser sich verkanten und in dieser Lage über den Deckel verspannt werden. Dies hat zur Folge, daß zwischen Rohluftraum und Reinluftraum keine korrekte Abdichtung mehr besteht und damit staubhaltige Luft in den Reinluftraum und damit in den Motor gelangt.

Es ist weiterhin aus dem DE-U-73 21 762 ein Ansaugluftfilter für Brennkraftmaschinen, Kompressoren und sonstige luftansaugende Maschinen bekannt, welches zwei Filtereinsätze aufweist, wobei zur Befestigung der Filtereinsätze ein im Reinluftstutzen verankerter zentraler Gewindebolzen vorgesehen ist. Dieser Gewindebolzen wird durch die öffnungen in die Abdeckscheiben hindurchgeführt und die Filtereinsätze mittels aufgeschraubter Gewindemuttern axial gegen die Gehäuseteile festgespannt. Zur lagerichtigen Fixierung der Filtereinsätze sind an dem Gewindebolzen Anschläge angeordnet, wobei die Abdeckscheiben an den Anschlägen aufliegen. Bei dieser Art der Befestigung ist eine sehr hohe Genauigkeit der Anschläge in bezug auf die Auflagefläche der Filtereinsätze im Gehäuse erforderlich. Außerdem ist auch hier die hohe Genauigkeit bei dem Längenmaß der Filtereinsätze erforderlich, um ein sicheres Abdichten der am Reinluftauslaß liegenden Stirnseite des Filtereinsatzes zu gewährleisten. Diese hohe Genauigkeit führt bei den öfters auszutauschenden Filtereinsätzen zu unvertretbar hohen Kosten.

Ein weiterer Nachteil der Anordnung eines Gewindebolzens ist darin zu sehen, daß dieser innerhalb des reinluftseitigen Luftauslasses befestigt werden muß. Dies mag bei einem aus Blech hergestelltem Gehäuse beispielsweise durch Punktschweißen möglich sein. Bei einem Gehäuse, welches aus Kunststoff hergestellt ist und bei welchem der Reinluftauslaß in das Gehäuse integriert ist läßt sich ein Gewindebolzen nur mit zusätzlichen Verstärkungsrippen, Metalleinlegeteilen und ähnlichen an dem Gehäuse befestigen.

Selbst bei einer recht aufwendigen Konstruktion besteht die Gefahr, daß das Fließverhalten des Kunststoffs über einen längeren Zeitraum dazu führt, daß sich die Haltekräfte auf den Filtereinsatz verringern und damit die Abdichtung zwischen Rohluftseite und Reinluftseite durch das unbemerkte Lösen des Filtereinsatzes nicht mehr gewährleistet ist.

Im Stand der Technik ist ferner die FR-A-13 79 165 enthalten. Diese beschreibt eine Axialabdichtung einer Filterpatrone in Verbindung mit einem Verschlußsystem. Die Axialabdichtung hat bei diesem System drei Funktionen:
1. das Abdichten der Rohluftseite gegenüber der Reinluftseite,
2. das kraftschlüssige Befestigen der Filterpatrone an dem Reinluftauslaß bzw. an der Stirnseite des Gehäuses,
3. Maßtoleranzen, die sich bei dem Zusammenbau vom Filtergehäuse ergeben, abzufangen.

Es ist für den Fachmann äußerst schwierig eine Axialdichtung herzustellen, die diese drei Funktionen in zuverlässiger Weise übernimmt. Sobald eine der Funktionen nicht vollständig erfüllt ist, besteht die Gefahr, daß ungefilterte Luft in den Ansaugbereich des Motors eindringt und damit eine Zerstörung des Motors bewirkt.

Die EP-A-423 435 ist eine nicht vorveröffentlichte Anmeldung, bei der ebenfalls eine Radialabdichtung eines Filtereinsatzes dargestellt ist. Diese Veröffentlichung zeigt ein Luftfilter, bei dem der Filtereinsatz mit dem Deckel des Gehäuses verschraubt ist.

Der Erfindung liegt deshalb die Aufgabe zugrunde, die genannten Nachteile zu vermeiden und ein Luftfilter insbesondere mit einem Kunststoffgehäuse zu schaffen, bei welchem eine einfache und zuverlässige Befestigung der Filtereinsätze möglich ist.

Diese Aufgabe wird ausgehend von dem Oberbegriff des unabhängigen Patentanspruchs 1 durch dessen kennzeichnenden Merkmale gelöst.

Ein wesentlicher Vorteil der Erfindung ist darin zu sehen, daß durch die konstruktive Gestaltung des Filtereinsatzes, in Verbindung mit der Befestigung desselben an der Verbindungsstelle zwischen Gehäuse und Gehäusedeckel, eine auch unter schwierigen Umweltbedingungen, das heißt auch bei sehr starken Erschütterungen oder Rüttelbewegungen, sichere Befestigung des Filtereinsatzes gewährleistet ist. Ein Verkanten des Filtereinsatzes beim Einbau bzw. beim Austausch ist nicht möglich, da in diesem Fall der Gehäusedeckel nicht mit dem Gehäuse in Verbindung gebracht werden kann. Durch diese Art der Befestigung des Filtereinsatzes wird somit zusätzlich noch eine Kontrolle über den lagerichtigen Einbau des Filtereinsatzes erreicht.

Gemäß einer Weiterbildung der Erfindung nach Anspruch 1 wird vorgeschlagen, als Befestigungselement für den Filtereinsatz Laschen vorzusehen, welche sternförmig von der Stirnseite des Filtereinsatzes aus nach außen gerichtet sind und jeweils bis in die Verbindungsstelle zwischen Gehäuse und Deckel eingreifen. Anstelle solcher Laschen kann der Filtereinsatz auch mit einer Abdeckscheibe an seinem stirnseitigen Ende versehen sein, die in ihrem Durchmesser so groß bemessen ist, daß sie bis zu der Verbindungsstelle zwischen Gehäuse und Deckel reicht und damit in die Befestigungsnut an dem Gehäuse eingreift.

Eine weiter Ausgestaltung der Erfindung sieht vor, zum Verbinden von Gehäuse und Deckel Schnappverbindungen vorzusehen. Diese sind ohne Werkzeug bettätigbar und außerdem in der Lage, kleine Toleranzen auszugleichen. Zur Abdichtung des Filtereinsatzes an seiner dem Luftauslaß zugewandten Stirnseite ist nach einer Ausgestaltung der Erfindung vorgesehen, eine Radialdichtung anzuordnen, welche am Filtereinsatz befestigt ist und an dem rohrförmigen Ansatz des Gehäuses anliegt. Eine solche Radialdichtung gewährt eine sichere und zuverlässige Abdichtung. Außerdem hat diese den Vorteil, daß Längentoleranzen des Filtereinsatzes oder des Gehäuses keinen Einfluß auf die Dichtheit zwischen Filtereinsatz und Gehäuse haben. Solche Abdichtungen sind auch selbst unter extremen Temperaturbedingungen, Temperaturschwankungen, Schwingungen und Stöße in der Lage die Dichtungswirkung aufrechtzuerhalten.

Die Erfindung wird nachfolgend anhand eines Ausführungsbeispiels näher erläutert. Es zeigt:

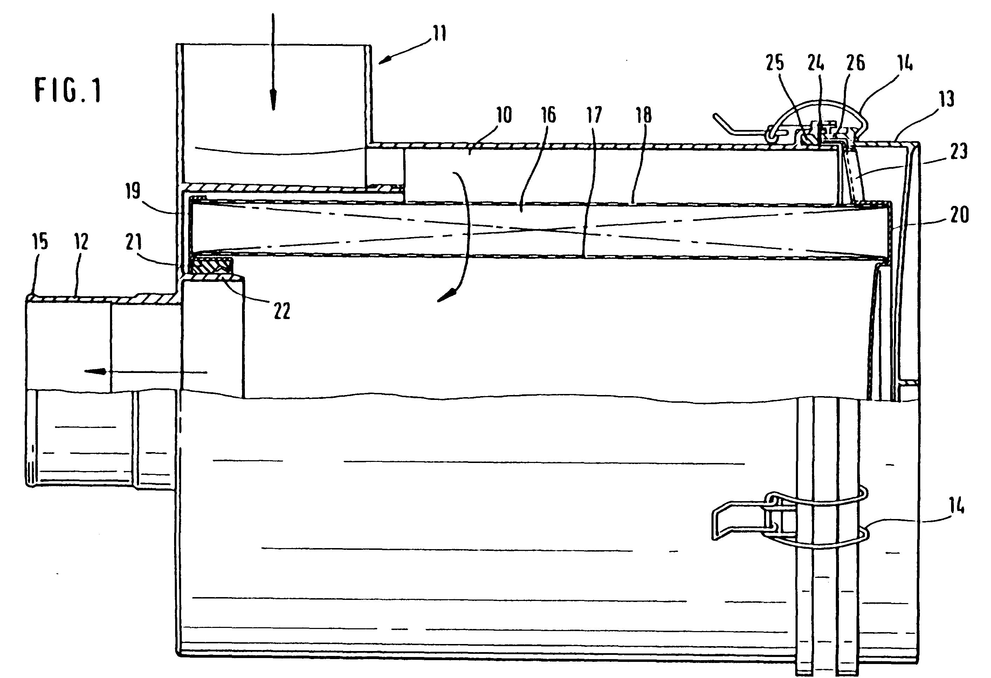

Fig. 1 Einen Schnitt durch ein Ansaugluftfilter.

Das in der Figur 1 gezeigte Ansaugluftfilter besteht aus einem Gehäuse 10, welches einen Rohlufteinlaß 11 und einen Reinluftauslaß 12 aufweist. Das Gehäuse ist an seinem, dem Reinluftauslaß gegenüberliegenden Ende mit einem Gehäusedeckel 13 verschlossen. Mehrere am Umfang verteilt angeordnete Verschlüsse 14 sorgen für eine sichere Befestigung des Gehäusedeckels. Der Reinluftauslaß 12 des Gehäuses ist ein rohrförmiger Ansatz der sich nach außen erstreckt und mit einem Ringwulst 15 versehen ist zur Befestigung eines Ansaugschlauches oder ähnlichem. Ein Filtereinsatz 16 besteht in bekannter Weise aus einem sternförmig gefalteten Filterpapier, welches zwischen einer inneren Stützhülse 17 und einer äußeren Stützhülse 18 angeordnet ist. Die Stirnflächen des Filtereinsatzes 16 sind mit Endscheiben 19, 20 geschlossen.

An der Endscheibe 19 befindet sich eine Radialdichtung 21. Diese stellt die Abdichtung des Rohluftraumes gegenüber dem Reinluftraum an dieser Stirnseite des Ansaugluftfilters her.

Die Radialdichtung liegt an einem konzentrischen Ring 22 auf, der sich in das Gehäuse hinein erstreckt. Die weitere Stirnseite des Filtereinsatzes 16 ist mit einer Endscheibe 20 versehen, die gleichzeitig auch die Trennung zwischen Reinluftraum und Rohluftraum bewirkt. Durch die Kontaktstelle zwischen Radialdichtung 21 und Ring 22 wird eine radiale Fixierung des Filtereinsatzes an dieser Stirnseite bewirkt. An der gegenüberliegenden Seite ist der Filtereinsatz mit sternförmig von dem Außendurchmesser des Filtereinsatzes sich nach außen erstreckende Laschen 23 versehen. Diese Laschen sind keine zusätzlichen Elemente an dem Filtereinsatz sondern sind Teile der Endscheibe, die entsprechend gestaltet ist. Diese Laschen sind an ihrem äußeren Ende so geformt, daß sie in eine Ringnut 24 des Gehäuses 10 hineingreifen. In dieser Ringnut befindet sich ferner eine Dichtung 25. Außerdem greift in diese Ringnut auch ein ringförmiger Ansatz 26 des Gehäusedeckels 13 ein, wobei mit dem Verschluß 14, welcher ein üblicher Bügelverschluß sein kann, der Deckel an dem Gehäuse befestigt wird. Durch diese Verschlußart wird erreicht, daß nicht nur das Gehäuse mit dem Deckel verbunden wird, sondern auch der Filtereinsatz innerhalb seines Endbereichs radial befestigt ist und außerdem aufgrund dieser Befestigung eine zusätzliche axiale Befestigung entfällt.

## Patentansprüche

1. Ansaugluftfilter für die verbrennungskraftmaschine eines Fahrzeugs, mit wenigstens einem innerhalb des Gehäuses (10) angeordneten ringförmigen Filtereinsatz (16) der radial von außen nach innen durchströmt ist, wobei das Gehäuse (10) im wesentlichen zylinderförmig ausgebildet ist und einen rohluftseitigen Lufteinlaß (11) und einen reinluftseitigen Luftauslaß (12) aufweist und wobei der Luftauslaß (12) an einer Stirnseite des Gehäuses (10) angeordnet ist und die gegenüberliegende Stirnseite mit einem Deckel (13) verschließbar ist, wobei an der, dem reinluftseitigen Luftauslaß (12) gegenüberliegenden Stirnseite der Filtereinsatz (16) mit einer Abdeckung verschlossen ist und an dieser Seite der Filtereinsatz (16) ein Befestigungselement (23) aufweist welches in die Verbindungsstelle zwischen Gehäuse (10) und Deckel (13) eingreift und somit ein Befestigen des Deckels (13) an dem Gehäuse (10) gleichzeitig ein Befestigen des Filtereinsatzes (16) bewirkt und damit eine axiale und radiale Sicherung des Filtereinsatzes (16) gewährleistet ist, wobei an dem reinluftseitigen Luftauslaß (12) das Gehäuse (10) einen rohrförmigen Ansatz (22) aufweist, der sich in das Innere des Filtereinsatzes (16) erstreckt, dadurch gekennzeichnet, daß der Filtereinsatz (16) an seiner stirnseitigen Öffnung eine Radialdichtung (21) trägt und diese Radialdichtung (21) an dem rohrförmigen Ansatz (22) des Gehäuses (10) anliegt und wobei die Abdeckung als Endscheibe (20) ausgebildet ist und Endscheibe (20) sowie Befestigungselement (23) mit dem Filtereinsatz (16) eine banliche Einheit bilden.

2. Ansaugluftfilter nach Anspruch 1 dadurch gekennzeichnet, daß das Befestigungselement (23) aus mehreren Laschen besteht, die jeweils in die Verbindungsstelle zwischen Gehäuse (10) und Deckel (13) eingreifen.

3. Ansaugluftfilter nach Anspruch 1 dadurch gekennzeichnet, daß das Befestigungselement (23) eine ringförmige Scheibe ist, die über den gesamten Umfang in die Verbindungsstelle zwischen Gehäuse (10) und Deckel (13) eingreift.

4. Ansaugluftfilter nach einem der vorherigen Ansprüche dadurch gekennzeichnet, daß Bügelverschlüsse (44) vorgesehen sind, mit denen der Deckel (13) an dem Gehäuse (10) befestigbar ist.

## Claims

1. Intake air filter for the internal combustion engine of a vehicle, having at least one annular filter insert (16), which is disposed within the housing (10) and traversed radially inwardly from the outside, the housing (10) having a substantially cylindrical configuration and including an air inlet (11) at the unfiltered air side and an air outlet (12) at the filtered air side, and the air outlet (12) being disposed on an end face of the housing (10), and the oppositely situated end face being closable by means of a cover (13), the filter insert (16) being closed by means of a covering at the end face situated opposite the air outlet (12) at the filtered air side, and the filter insert (16) having on this side a securing means (23) which engages in the junction between housing (10) and cover (13), and, in consequence, a securement of the cover (13) on the housing (10) simultaneously effecting a securement of the filter insert (16) and, in consequence, an axial and radial securement of the filter insert (16) being ensured, the housing (10) having, at the air outlet (12) at the filtered air side, a tubular extension (22) which extends into the interior of the filter insert (16), characterised in that the filter insert (16) is provided with a radial seal (21) at its aperture in the end face, and this radial seal (21) abuts against the tubular extension (22) of the housing (10), the covering being configured as end plate (20), and end plate (20) and securing means (23) forming a structural unit with the filter insert (16).

2. Intake air filter according to claim 1, characterised in that the securing means (23) comprises a plurality of lugs which each engage in the junction between housing (10) and cover (13).

3. Intake air filter according to claim 1, characterised in that the securing means (23) is an annular plate, which engages in the junction between housing (10) and cover (13) over the entire circumference.

4. Intake air filter according to one of the previous claims, characterised in that clamp closures (44) are provided, by means of which the cover (13) is securable on the housing (10).

## Revendications

1. Filtre à air d'aspiration pour moteur à combustion interne d'un véhicule, avec au moins une cartouche de filtre (16), de forme annulaire disposée à l'intérieur du boîtier (10) et qui est parcourue radialement de l'extérieur vers l'intérieur, le carter (10) étant sensiblement constitué en forme de cylindre, et présentant une entrée d'air (11) situé du côté de l'air non filtré et une sortie d'air (12), située du côté de l'air purifié, et dans lequel la sortie d'air (12) est disposée sur une face frontale du boîtier (10) et dans lequel la face frontale opposée peut être fermée avec un couvercle (13), la cartouche de filtre (16) étant fermée, sur la face frontale opposée à la sortie d'air (12) qui est située du côté de l'air purifié, par un recouvrement, et sur ce côté la cartouche de filtre (16) présentant un élément de fixation (23) qui vient en prise au point de jonction entre le boîtier (10) et le couvercle (13) et qui de cette façon assure une fixation du couvercle (13) sur le boîtier (10) en même temps qu'une fixation de la cartouche de filtre (16) et de cette façon garantit un blocage axial et radial de la cartouche de filtre (16), le boîtier (10) présentant sur la sortie d'air (12), qui est située du côté de l'air purifié, un appendice de forme tubulaire (22), qui s'étend à l'intérieur de la cartouche de filtre (16),
caractérisé en ce que
• la cartouche de filtre (16) porte sur son orifice, situé du côté frontal, un joint d'étanchéité radial (21),
• ce joint d'étanchéité radial (21) repose sur l'appendice de forme tubulaire (22) du boîtier (10), et
• le recouvrement est constitué sous la forme d'un disque terminal (20), le disque terminal (20) ainsi que l'élément de fixation (23) forment une unité de construction avec la cartouche de filtre (16).

2. Filtre à air d'aspiration, selon la revendication 1,
caractérisé en ce que
l'élément de fixation (23) consiste en plusieurs pattes, qui viennent respectivement en prise au point de jonction entre le boîtier (10) et le couvercle (13).

3. Filtre à air d'aspiration, selon la revendication 1,
caractérisé en ce que
l'élément de fixation (23) est un disque de forme annulaire, qui vient en prise sur tout le pourtour au point de jonction entre le boîtier (10) et le couvercle (13).

4. Filtre à air d'aspiration, selon l'une des revendications précédentes,
caractérisé en ce qu'
on prévoit des fermetures à étrier (44), avec lesquelles le couvercle (13) peut être fixé sur le boîtier (10).
